# EUROPÄISCHE PATENTANMELDUNG

(11) **EP 0 887 563 A1**
(43) Veröffentlichungstag der Anmeldung: **30.12.1998**
(21) Anmeldenummer: 98110994.5
(22) Anmeldetag: 16.06.1998
(51) Int. Cl.: F16B 25/00, F16B 25/10

(54) **Schraube zur Montage von Beschlägen**

(30) Priorität: 20.06.1997 DE 19726190
(71) Anmelder: Adolf Würth GmbH & Co. KG, 74653 Künzelsau (DE)
(72) Erfinder: Wunderlich, Andreas, 74635 Kupferzell (DE)
(74) Vertreter: Patentanwälte Ruff, Beier, Schöndorf und Mütschele

(57) **Zusammenfassung**

Eine Schraube zur Montage von Beschlägen an Kunststoff-Fenstern aus Recycling-Material enthält an einem Schraubenschaft ein Schraubengewinde, dessen Steigung etwa gleich groß ist wie der Außendurchmesser des Gewindes. Dadurch wird es möglich, die Schraube zur Befestigung eines Beschlagteils ohne ein Vorbohren in das Material einzuschrauben, ohne daß sich durch Materialverdrängung Verwerfungen oder Ausbeulungen an der Oberfläche des Rahmens bilden.

## Beschreibung

Es ist bekannt, daß Fensterrahmen, Türrahmen oder dergleichen aus Kunststoff hergestellt werden können. Zur Befestigung von Beschlägen an diesen Rahmen dienen Schrauben.

Es gibt Kunststoff-Fenster, bei denen die Rahmen nicht als Profil, sondern als Vollmaterial aus recyceltem Kunststoff hergestellt sind. Um dieses Vollmaterial herum wird dann ggf. noch ein Blechmantel beispielsweise aus Aluminium angebracht. Die Beschläge müssen relativ nahe an der Seitenfläche des Rahmens angebracht werden. Verwendet man hier die bekannten Schrauben, spaltet sich das Material, und es treten Beulen durch Verdrängung des Materials auf. Diese Beulen sind an der Oberfläche zu sehen. Um diese Aufwerfung zu verhindern, ist es bislang üblich, die Schraubenlöcher vorzubohren. Dies bedeutet jedoch einen erhöhten Montageaufwand.

Der Erfindung liegt die Aufgabe zugrunde, eine Schraube zu schaffen, mit deren Hilfe es möglich ist, Beschläge an Rahmenelementen aus Vollkunststoff anzuschrauben, ohne daß die Löcher vorgebohrt werden müssen. Zur Lösung dieser Aufgabe schlägt die Erfindung eine Schraube mit den im Anspruch 1 genannten Merkmalen vor. Weiterbildungen der Erfindung sind Gegenstand von Unteransprüchen.

Es hat sich herausgestellt, daß durch eine Schraube mit einer großen Steigung bei einem relativ schlanken Schaft das Problem des Ausbeulens nicht mehr auftritt. Die Steigung bei der von der Erfindung vorgeschlagenen Schraube beträgt etwa das doppelte wie bei den bisher üblichen Schrauben.

In Weiterbildung der Erfindung kann vorgesehen sein, daß das Verhältnis zwischen dem Gewindedurchmesser und dem Kerndurchmesser, das heißt dem Durchmesser des Schafts, im Bereich von etwa 1,6 bis etwa 1,8 liegt. Auch dies bedeutet einen relativ schlanken Schaft, der zu einer nur geringen Materialverdrängung bei dem Material des Rahmens führt.

In nochmaliger Weiterbildung der Erfindung kann vorgesehen sein, daß das Verhältnis zwischen der Steigung des Gewindes und dem Kerndurchmesser im Bereich von etwa 1,6 bis etwa 1,8 liegt.

Zur Erhöhung des Überdrehmoments kann erfindungsgemäß vorgesehen sein, daß das Gewinde asymmetrisch ausgebildet ist. Damit wird ein Herausdrehen des durch die Schraube in dem Kunststoff geformten Mutterngewindes verhindert.

Insbesondere kann vorgesehen sein, daS die steilere Flanke des Gewindes dem Kopf der Schraube zugewandt ist. Unter steiler ist diejenige Flanke zu verstehen, die sich einer Ebene senkrecht zu der Längsachse der Schraube stärker annähert. Bei dem hier vorgeschlagenen Gewinde kann dieser Winkel im Bereich von etwa 5° liegen.

In Weiterbildung der Erfindung kann vorgesehen sein, daß der Winkel zwischen der der Schraubenspitze zugewandten Flanke des Gewindes und einer Ebene senkrecht zu der Längsachse im Bereich von etwa 30° liegt.

Die Erfindung schlägt vor, daß das Gewinde relativ spitzwinklig ausgebildet ist, d. h., daß die Flanken einen Winkel von etwa 35° miteinander einschließen.

In nochmaliger Weiterbildung der Erfindung kann vorgesehen sein, daS das Gewinde bis zu der Spitze der Schraube ausgewalzt ist, d. h. möglichst weit nach vorne. Dabei kann vorgesehen sein, daß das Gewinde im Bereich der Schraubenspitze, also demjenigen Teil des Schraubenschafts, der sich verjüngt, weniger asymmetrisch bis symmetrisch ausgebildet ist. Es hat sich herausgestellt, daß sich dann das Gewinde besser bis zur tatsächlichen Spitze auswalzen läßt.

Erfindungsgemäß kann in Weiterbildung vorgesehen sein, daß der Übergang zwischen den Flanken des Gewindes und dem Schaft nicht scharfkantig, sondern abgerundet ausgebildet ist. Dabei kann insbesondere vorgesehen sein, daS der Übergang zwischen der dem Schraubenkopf zugewandten Flanke des Gewindes und dem Schaft mit einem kleineren Radius erfolgt als der Übergang an der der Schraubenspitze zugewandten Gewindeflanke.

Beispielsweise kann bei dem Übergang zwischen der dem Kopf zugewandten Gewindeflanke und dem Schaft ein Radius von 0,25 mm vorhanden sein, während der Radius an der gegenüberliegenden Flanke doppelt so groß ist, also 0,5 mm beträgt. Diese Maßnahme der Verrundung des Übergangs, insbesondere bei beiden Gewindeflanken, wirkt mit, die Schraube trotz des schlanken Schafts stabil zu machen.

Die von der Erfindung vorgeschlagene Schraube erreicht durch eine Kombinationswirkung mehrerer Merkmale eine sichere Befestigung ohne ein Ausbeulen des Materials, selbst wenn der Beschlag nahe am Rand des Rahmens angebracht wird.

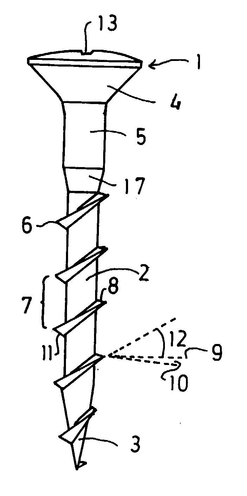

Weitere Merkmale, Einzelheiten und Vorzüge der Erfindung ergeben sich aus den Patentansprüchen, deren Wortlaut durch Bezugnahme zum Inhalt der Beschreibung gemacht wird, der folgenden Beschreibung einer bevorzugten Ausführungsform der Erfindung sowie anhand der Zeichnung. Hierbei zeigt die einzige Zeichnungsfigur eine Seitenansicht einer von der Erfindung vorgeschlagenen Schraube.

Die in der Figur dargestellte Schraube zur Befestigung eines Beschlagteils an einem Fensterrahmen aus Vollkunststoff enthält einen Schraubenkopf 1 in Form eines Linsenkopfs. Der Schraubenkopf 1 ist an dem einen Ende des Schraubenschafts 2 angeformt, an dessen anderem Ende die Schraubenspitze 3 ausgebildet ist. Unterhalb der kegelförmigen Unterseite 4 des Schraubenkopfs 1 ist zunächst ein glatter zylindrischer Abschnitt 5 mit einem ersten Durchmesser vorhanden. Dieser Abschnitt 5 greift zusammen mit der Unterseite 4 des Schraubenkopfs 1 in eine entsprechende Öffnung des Beschlagteils ein. An den Abschnitt 5 ohne Gewinde schließt sich dann ein Abschnitt verringerten Durchmessers an, auf dem das Schraubengewinde 6 aufgewalzt ist. Der Übergang zwischen dem das Gewinde 6 aufweisenden Teil des Schraubenschafts 2 und dem glatten Teil 5 ist kegelstumpfförmig ausgebildet. Das Schraubengewinde 6 erstreckt sich von diesem kegelförmigen Übergangsteil 7 bis zum dem vorderen Ende der Schraube. Damit wird erreicht, daS die Schraube beim Ansetzen und dem ersten Drehen schon unmittelbar greift, so daß der weitere Vorschub von dem Gewinde mit bestimmt wird. Die Steigung 7 des Gewindes, also der Abstand zweier benachbarter Gewindegänge an einer Stelle des Umfangs, entspricht etwa dem Außendurchmesser des Gewindes. Das Verhältnis von Steigung 7 zu Durchmesser des Gewindes liegt also in einem Bereich von etwa 0,9 bis etwa 1,1.

Bei dem Gewinde handelt es sich um ein asymmetrisches Gewinde, bei dem die dem Schraubenkopf 1 zugewandten Flanken 8 mit einer senkrecht zu der Längsachse der Schraube verlaufenden Ebene 9 einen Winkel von etwa 5° einschließen. Dieser Winkel 10 ist gestrichelt eingezeichnet. Die gegenüberliegende, der Schraubenspitze 3 zugewandte Flanke 11 des Gewindes schließt dagegen mit der senkrechten Ebene 9 einen Winkel 12 ein, der im Bereich von etwa 30° liegt. Dies bedeutet anders ausgedrückt, daß die steilere Flanke 8 des Gewindes dem Schraubenkopf zugewandt ist, während die flache Flanke 11 der Schraubenspitze 3 zugewandt ist. Beide Flanken bilden miteinander einen Winkel von etwa 35°.

Im Bereich der Schraubenspitze 3 nähert sich die Form des Gewindes einer symmetrischen Form an, was man insbesondere direkt an der Spitze sehen kann.

Das Verhältnis vom Außendurchmesser des Gewindes 6 zu dem Kerndurchmesser des das Gewinde 6 aufweisenden Teils des Schafts 2 liegt im Bereich von etwa 1,6 bis etwa 1,8.

Bei der hier dargestellten Schraube liegt auch das Verhältnis zwischen Steigung 7 des Gewindes 6 und dem Kerndurchmesser in dem Bereich von etwa 1,6 bis etwa 1,8.

Der Schraubenkopf 1 weist eine Schraubenantriebsvertiefung 13 auf, bei der es sich um eine der üblichen Ausbildungen handeln kann, also beispielsweise einen Kreuzschlitz.

Die dem Schraubenkopf 1 zugewandten Flanken 8 des Gewindes gehen über einen im Querschnitt kreisförmigen Übergang in die zylindrische Außenfläche des Schafts 2 über. Der Radius dieser Krümmung kann beispielsweise mit Vorteil 0,25 mm betragen.

Auf der der Schraubenspitze 3 zugewandten Seite gehen die Flanken 11 des Gewindes über eine Krümmung mit einem Radius von beispielsweise 0,5 mm in die zylindrische Oberfläche des Schafts 2 über.

## Patentansprüche

1. Schraube zur Montage von Beschlägen oder dergleichen insbesondere an Rahmen aus Recycling-Material, mit
1.1 einem Schraubenkopf (1),
1.2 einem Schraubenschaft (2),
1.3 einer Schraubenspitze (3), sowie mit
1.4 einem Schraubengewinde (6), wobei
1.5 das Verhältnis von Steigung (7) des Gewindes (6) zu dem Außendurchmesser des Gewindes (6) im Bereich von etwa 0,9 bis etwa 1,1 liegt.

2. Schraube nach Anspruch 1, bei der das Verhältnis von Gewindedurchmesser zu Kerndurchmesser in Bereich von etwa 1,6 bis etwa 1,8 liegt.

3. Schraube nach Anspruch 1 oder 2, bei der das Verhältnis von Steigung (7) des Gewindes (6) zu dem Kerndurchmesser im Bereich von etwa 1,6 bis etwa 1,8 liegt.

4. Schraube nach einem der vorhergehenden Ansprüche, bei der das Gewinde (6) im Bereich des Schraubenschafts (2) asymmetrisch ist.

5. Schraube nach Anspruch 4, bei der die steilere Flanke (8) des Gewindes (6) dem Kopf (1) der Schraube zugewandt ist.

6. Schraube nach Anspruch 4 oder 5, bei der der Winkel zwischen der dem Schraubenkopf (1) zugewandten Flanke (8) und einer Ebene (9) senkrecht zu der Längsachse der Schraube im Bereich von etwa 5° liegt.

7. Schraube nach einem der Ansprüche 4 bis 6, bei der der Winkel zwischen der der Schraubenspitze (3) zugewandten Flanke (11) und einer Ebene (9) senkrecht zu der Längsachse der Schraube im Bereich von etwa 30° liegt.

8. Schraube nach einem der vorhergehenden Ansprüche, bei der der Winkel zwischen beiden Flanken (8, 11) des Gewindes (6) im Bereich von etwa 35° liegt.

9. Schraube nach einem der vorhergehenden Ansprüche, bei der das Gewinde (6) bis zu der Spitze der Schraube ausgewalzt ist.

10. Schraube nach einem der Ansprüche 4 bis 9, bei der das Gewinde (6) im Bereich der Schraubenspitze (3) weniger asymmetrisch als im übrigen Bereich bis symmetrisch ausgebildet ist.

11. Schraube nach einem der vorhergehenden Ansprüche, bei der der Übergang zwischen den Flanken (8, 11) des Gewindes (6) und dem Schaft (2) abgerundet erfolgt, vorzugsweise mit einem Krümmungsradius im Bereich von 0,25 bis 0,5 mm.

12. Schraube nach einem der vorhergehenden Ansprüche, enthaltend Merkmale aus mindestens einem der vorhergehenden Ansprüche in Kombination.
